Europäisches Patentamt

European Patent Office

Office européen des brevets

(11) Veröffentlichungsnummer: **0 006 182**
**A1**

# EUROPÄISCHE PATENTANMELDUNG

(21) Anmeldenummer: 79101788.2

(22) Anmeldetag: 06.06.79

(51) Int. Cl.³: **H 04 L 25/28**, H 03 F 3/38

(30) Priorität: 16.06.78 DE 2826536

(43) Veröffentlichungstag der Anmeldung: 09.01.80
Patentblatt 80/1

(84) Benannte Vertragsstaaten: **AT CH DE FR NL SE**

(71) Anmelder: **Nixdorf Computer Aktiengesellschaft,
Fürstenallee 7, D-4790 Paderborn (DE)**

(72) Erfinder: **Hüllwegen, Josef, Hüttenstrasse 61, D-4791
Altenbeken (DE)**

(74) Vertreter: **Schaumburg, Karl-Heinz et al,
Patentanwälte Schaumburg, Schulz-Dörlam &
Thoenes Mauerkircherstrasse 31, D-8000
München 80 (DE)**

(54) Schaltungsanordnung zur erdfreien Übertragung von Signalen über Trennstellen in Fernmeldeanlagen.

(57) Die Erfindung betrifft eine Schaltungsanordnung zur erdfreien Übertragung von Signalen über Trennstellen in Fernmeldeanlagen mit Hilfe auf der Primärseite der Trennstelle signalgesteuerter hochfrequenter Schwingungen, die auf der Sekundärseite der Trennstelle durch Gleichrichtung zur Wiedergabe der Signale ausgewertet werden. Zusätzlich zur sekundärseitigen Signalauswertung wird aus den hochfrequenten Schwingungen eine Gleichspannung abgeleitet, die zur Kompensation des der Amplitude der signalgesteuerten hochfrequenten Spannung entsprechenden Spannungsanteils bei der Auswertung der gleichgerichteten Signale verwendet wird.

- 1 -

## Schaltungsanordnung zur erdfreien Übertragung von Signalen über Trennstellen in Fernmeldeanlagen

Die Erfindung betrifft eine Schaltungsanordnung zur erdfreien Übertragung von Signalen über Trennstellen in Fernmeldeanlagen mit Hilfe auf der Primärseite der Trennstelle signalegesteuerter hochfrequenter Schwingungen, die auf der Sekundärseite der Trennstelle durch Gleichrichtung zur Wiedergabe der Signale ausgewertet werden, wobei ein auf die hochfrequenten Schwingungen abgestimmter Resonanzschwingkreis, der mit einem Hochfrequenzgenerator galvanisch getrennt gekoppelt ist, mit einer mit dem Eingang der Trennstelle verbundenen Modulationsschaltung verbunden und induktiv mit einer auf der Sekundärseite der Trennstelle vorgesehenen Demodulationsschaltung gekoppelt ist.

Eine Schaltungsanordnung dieser Art ist durch die DE-OS 25 04 785 bekannt. Sie ermöglicht die Übertragung analoger oder digitaler Signale über Trennstellen bei hoher Übertragungsgeschwindigkeit und sehr kleinen Signalamplituden, so daß sie sich beispielsweise zur linearen Übertragung von Meßsignalen eignet. Der Hochfrequenzgenerator speist dabei seine hochfrequenten Schwingungen in den Resonanzschwingkreis ein, an dem sie durch die Modulationsschaltung abhängig von den am Eingang der Trennstelle auftretenden Signalen moduliert werden. Die modulierte Hochfrequenz wird induktiv auf die Demodulationsschaltung gekoppelt, die dann durch Beseitigung
des hochfrequenten Anteils die Eingangssignale am Ausgang der Trennstelle genau nachbildet. Es ist dadurch
möglich, abhängig von der Ausbildung bzw. Empfindlichkeit der Modulationsschaltung Signale variabler Amplitude über die Trennstelle zu übertragen, so daß sie wahlweise analoge oder digitale Signale verarbeiten kann.
Durch die anschließende Demodulation ist gewährleistet,
daß der Verlauf der Ausgangssignale dem Verlauf der Eingangssignale genau folgt, denn durch den Modulationsvorgang bestimmt die Amplitude der Eingangssignale die
Amplitude der aus dem Schwingkreis ausgekoppelten hochfrequenten Schwingungen.

Bei der bekannten Schaltungsanordnung speist der Hochfrequenzgenerator also seine Schwingungen kontinuierlich
auf die Trennstelle ein, und beim Auftreten eines Eingangssignals werden diese Schwingungen moduliert. Dadurch
entsteht nach der Demodulation ein kontinuierlich vorhandener Gleichspannungsanteil, der am Ausgang der Trennstelle beseitigt werden muß, wenn die genaue Nachbildung der Eingangssignale erzielt werden soll. Dies kann
beispielsweise durch eine entsprechende Bemessung der
Ansprechschwelle eines Ausgangsverstärkers geschehen. Es
hat sich jedoch gezeigt, daß ein einfacher Ausgangsverstärker eine gewisse Temperaturabhängigkeit besitzt und
die einwandfreie Beseitigung der genannten Gleichspannungskomponente nicht immer gewährleistet ist. Außerdem können auch Schwankungen der Gleichspannungskomponente
dadurch auftreten, daß der Hochfrequenzgenerator beispielsweise durch Temperatureinflüsse Spannungs- und/oder
Frequenzänderungen erfährt, die durch eine konstante
Ansprechschwelle eines Ausgangsverstärkers gleichfalls
nicht beseitigt werden können.

Es ist Aufgabe der Erfindung, die bekannte Schaltungsanordnung so zu verbessern, daß über eine bloße Beseitigung der auf der Sekundärseite der Trennstelle vorhandenen Gleichspannungskomponente hinaus auch eine Beseitigung störender Einflüsse der beschriebenen Art erfolgt.

Eine Schaltungsanordnung eingangs genannter Art ist zur Lösung dieser Aufgabe erfindungsgemäß derart ausgebildet, daß aus den hochfrequenten Schwingungen durch separate Gleichrichtung eine Gleichspannung zur Kompensation des der Amplitude der modulierten hochfrequenten Spannung entsprechenden Gleichspannungsanteils der demodulierten Signale erzeugt wird.

Durch die Erfindung wird erreicht, daß die nach der Demodultation vorhandene Gleichspannungskomponente laufend mit einer weiteren Gleichspannung kompensiert werden kann, deren Verlauf demjenigen der genannten Gleichspannungskomponente genau folgt, wodurch auch Schwankungen erfaßt werden, die beispielsweise durch Temperatureinflüsse auf den Hochfrequenzgenerator verursacht werden. Am Ausgang der Trennstelle erscheint dadurch auch bei durch Temperaturschwankungen verursachten Zustandsänderungen der Schaltelemente die genaue Nachbildung der dem Eingang der Trennstelle zugeführten Signale. Da auf diese Weise die laufende sehr genaue Kompensation der nach der Demodulation noch vorhandenen Gleichspannungskomponente gewährleistet ist, kann eine Schaltungsanordnung nach der Erfindung sehr kleine Eingangssignalamplituden in einer Größenordnung verarbeiten, die bei ca. 30% des mit der bekannten Schaltungsanordnung möglichen Wertes liegt.

Eine Weiterbildung der Erfindung zeichnet sich dadurch aus, daß die demodulierten Signale einerseits und die zur Kompensation dienende Gleichspannung andererseits auf die beiden Eingänge eines Differenzverstärkers geführt sind, dessen Ausgang den Ausgang der Trennstelle

- 4 -

0006182

bildet. Hierdurch ist die erforderliche Kompensation der Gleichspannungskomponente mit der in beschriebener Weise erhaltenen zusätzlichen Gleichspannung sehr einfach, und durch die Anwendung eines Verstärkerelementes ergibt sich eine zusätzliche Signalaufbereitung für die Ausgangssignale der Trennstelle.

Vorteilhaft sind die hochfrequenten Schwingungen des Hochfrequenzgenerators über einen Verstärker auf die Sekundärseite der Trennstelle eingespeist, dessen Innenwiderstand vorzugsweise dem am Einspeisungspunkt erscheinenden Widerstand des abgestimmten Resonanzschwingkreises entspricht. Dadurch ist es möglich, die hochfrequenzten Schwingungen ohne eine besondere Ankopplungswicklung in die Trennstelle einzuspeisen. Außerdem vermeidet der Verstärker Rückwirkungen auf den Hochfrequenzgenerator, so daß dieser in einem von Betriebsspannungsschwankungen unabhängigen Arbeitspunkt betrieben werden kann.

Die Demodulatorschaltung und die separate Gleichrichtung können als Gleichrichterelement jeweils die Emitter-Kollektorstrecke eines Transistors enthalten. Auch dadurch wird die Temperaturunabhängigkeit der Demodulation bzw. der nach der Erfindung vorgesehenen Kompensation noch weiter verbessert. Die Kollektor-Emitterspannung eines Transistors ist im leitenden Zustand sehr klein, so daß sie praktisch temperaturunabhängig ist. Die jeweils gleichzurichtende Wechselspannung ist wesentlich höher als die jeweilige Basis-Emitterspannung, so daß am Kollektor praktisch der Spitzenspannungswert der an den Emitter angelegten Wechselspannung auftritt.

Ein Ausführungsbeispiel der Erfindung wird im folgenden anhand der Figuren beschrieben. Es zeigen:

Figur 1 den prinzipiellen Aufbau einer Schaltungsanordnung nach der Erfindung und

Figur 2 eine Möglichkeit der schaltungstechnischen Ausführung des Hochfrequenzgenerators und
des die hochfrequenten Schwingungen auf die Sekundärseite der Trennstelle einspeisenden Verstärkers.

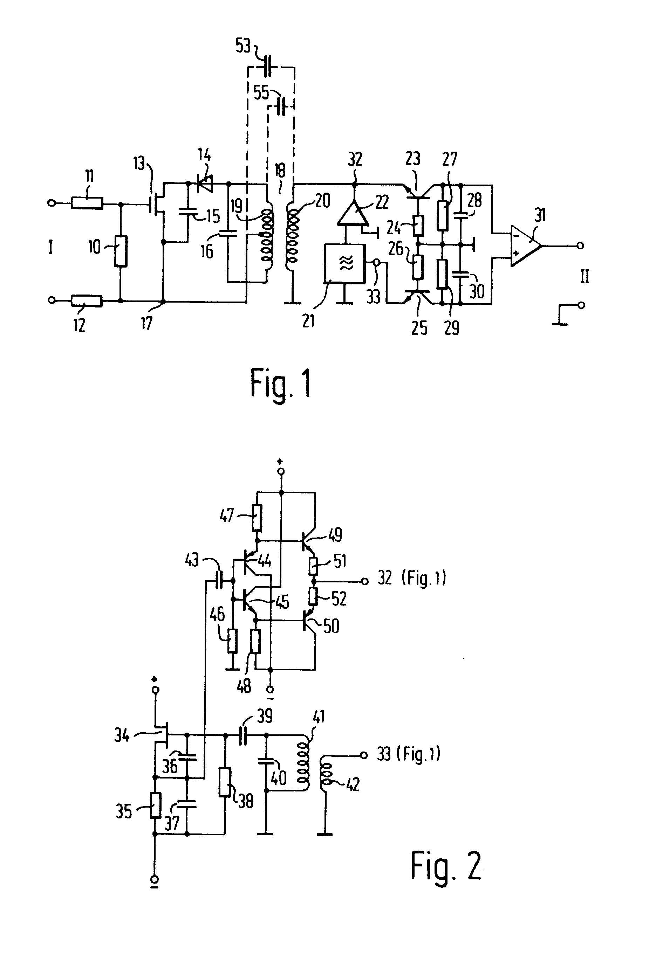

In Fig. 1 ist eine Trennstelle dargestellt, die einen
Signaleingang I und einen Signalausgang II aufweist. Der
Signaleingang I ist gegenüber dem Signalausgang II galvanisch getrennt, und es ist keine gemeinsame Erdverbindung vorhanden.

Die beiden Eingangsleitungen der Trennstelle sind mit
Symmetrierungswiderständen 11 und 12 versehen, die bei
geeigneter Dimensionierung ein symmetrisches Verhalten
des Trennstelleneingangs I bewirken, so daß auf einer
angeschalteten Leitung symmetrisch auftretende Störungen am Ausgang II der Trennstelle nicht in Erscheinung
treten. Ein Eingangswiderstand 10 ist hochohmig ausgeführt und mit der Steuerelektrode eines MOS-Feldeffekttransistors 13 verbunden, der mit einer Diode 14
eine Modulationsschaltung bildet, die einem Resonanzschwingkreis, bestehend aus einer Kapazität 16 und einer
Induktivität 19, parallelgeschaltet ist. Durch die Verwendung eines MOS-Feldeffekttransistors wird der Vorteil
erzielt, daß die in der Trennstelle ablaufenden hochfrequenten Vorgänge auf eine mit dem Eingang I verbundene Leitung nicht zurückwirken, denn ein MOS-Feldeffekttransistor hat zwischen seinem Arbeitsstromkreis
und seinem Steuerstromkreis keinen Gleichrichtereffekt,
wodurch außerdem auch eine Rückwirkungsfreiheit in bezug
auf einen Gleichspannungsoffset gewährleistet ist. Durch
die Verbindung des Feldeffekttransistors mit dem Resonanzschwingkreis über die Diode 14 wird gewährleistet,
daß der MOS-Feldeffekttransistor 13 auch mit einer Gleichspannungskomponente betrieben wird, was hinsichtlich seiner Funktion vorteilhaft ist. Schließlich wird durch die Verwendung des MOS-Feldeffekttransistors der Vorteil erzielt, daß eine optimale Verstärkung bereits im Zustand fehlender Vorspannung der Steuerelektrode möglich ist. Somit können an den Eingang der Trennstelle Signale mit wechselnder Polarität angeschaltet werden, die sich in beiden möglichen Richtungen zu dem Potential der Steuerelektrode ändern und mit diesem Wechsel eine entsprechende Modulation der am Resonanzschwingkreis auftretenden hochfrequenten Schwingungen bewirken.

Die hochfrequenten Schwingungen werden von einem Hochfrequenzgenerator 21 erzeugt und über einen Treiberverstärker 22 am Anschluß 32 einer auf der Sekundärseite der Trennstelle vorgesehenen Induktivität 20 eingespeist, die mit der primärseitigen Induktivität 19 einen Übertrager 18 bildet und durch die Verwendung des Treiberverstärkers 22 einen relativ geringen Wert haben kann, wodurch die Streukapazitäten 53, 55 des Übertragers sehr klein sind. Dies ist besonders vorteilhaft, weil insbesondere bei Anschluß des Eingangs I an Nachrichtenleitungen erdsymmetrische Störungen mit hohen Flankensteilheiten auftreten können, die denen der Signale des Hochfrequenzgenerators 21 mit etwa 10 V/μs entsprechen, über die Streukapazitäten jedoch nur mit geringer Amplitude übertragen werden.

Der auf die Frequenz der hochfrequenten Schwingungen abgestimmte Resonanzschwingkreis mit der Kapazität 16 und der Induktivität 19 führt eine hochfrequente Spannung, die über die Diode 14 gleichgerichtet wird und den MOS-Feldeffekttransistor 13 an einem Ladekondensator 15 speist. Im Ruhezustand der Schaltung, in dem keine Signale am Eingang I erscheinen, liegt an der Schaltstrecke des MOS-Feldeffekttransistors 13 also bereits eine Ruhegleichspannung, die dadurch geändert werden kann, daß der MOS-Feldeffekttransistor 13 an seiner Steuerelektorde durch Eingangssignale angesteuert wird und seinen weitgehend ohmschen Widerstand entsprechend dem Verlauf der Eingangssignale ändert. Damit ist dann die beschriebene Modulation der am Resonanzschwingkreis 16/19 auftretenden Wechselspannung verbunden.

Die Induktivität 19 ist mit einem Mittelabgriff versehen, der das Bezugspotential für die Modulationsschaltung liefert und mit dem Schaltungspunkt 17, d.h. mit dem Bezugspotentialpunkt der Modulationsschaltung verbunden ist, so daß ein Nullpunkt für die hochfrequenten Schwingungen entsteht und durch Anschaltung einer Übertragungsleitung an den Eingang I keine Verstimmung des Resonanzschwingkreises auftritt.

Die gemäß den Eingangssignalen modulierten, am Resonanzschwingkreis 16/19 auftretenden Schwingungen erzeugen an der sekundärseitigen Induktivität 20 eine entsprechende Wechselspannung, die über einen Transistor 23 mit Basiswiderstand 24 gleichgerichtet wird, so daß an einem RC-Glied 27/28 eine demodulierte Gleichspannung auftritt. Diese weist dadurch, daß die hochfrequenten Schwingungen des Hochfrequenzgenerators 21 kontinuierlich über den Treiberverstärker 22 bei 32 eingespeist werden, eine kontinuierliche Gleichspannungskomponente auf, deren Höhe der Amplitude der hochfrequenten Schwin-gungen im Ruhezustand entspricht. Über den weiteren Ausgang 33 des Hochfrequenzgenerators 21 wird nun eine hochfrequente, Wechselspannung zusätzlich ausgekoppelt, die in gleicher Weise wie die modulierte hochfrequente Wechselspannung über einen Transistor 25 mit Basiswiderstand 26 gleichgerichtet wird, so daß eine ihr entsprechende Gleichspannung an einem RC-Glied 29/30 auftritt.

Wenn diese zusätzliche Gleichspannung denselben Wert hat wie die vorstehend beschriebene, am RC-Glied 27/28 auftretende Gleichspannungskomponente, so kann diese durch die zusätzliche Gleichspannung in sehr einfacher Weise dadurch kompensiert werden, daß beide Spannungen auf die Eingänge eines Differenzverstärkers 31 geführt werden. An seinem Ausgang, der den Ausgang II der Trennstelle bildet, tritt dann die exakte Nachbildung der dem Eingang I zugeführten Eingangssignale auf.

Die Bemessung der zusätzlichen Gleichspannung derart, daß sie mit der beschriebenen Gleichspannungskomponente der demodulierten Wechselsignale übereinstimmt, ist in sehr einfacher Weise möglich. Hierzu kann beispielsweise die am Ausgang 33 des Hochfrequenzgenerators 21 auftretende hochfrequente Wechselspannung transformatorisch oder aber auch die durch ihre Gleichrichtung am RC-Glied 29/30 auftretende Gleichspannung durch entsprechende Bemessung von Schaltelementen dimensioniert werden. Ein Feinabgleich des ausgangsseitigen Nullpunktes ist durch geringfügiges Verstimmen des Resonanzschwingkreises 19/16 möglich.

Um eine optimale Leistungsanpassung zu erzielen, hat der Treiberverstärker 22 zweckmäßig einen Eingangswiderstand, der dem Widerstand des Resonanzkreises 16/19, von der Sekundärseite der Trennstelle aus gesehen, entspricht. In diesem Fall tritt dann am Schaltungspunkt 32 der halbe Wert der vom Hochfrequenzgenerator 21 an den Treiberverstärker 22 abgegebenen hochfrequenten Wechselspannung auf, so daß auch ein entsprechend geringer Wechselspannungswert am Ausgang 33 des Hochfrequenzgenerators 21 abzugeben ist.

In Fig. 2 ist eine Möglichkeit der schaltungstechnischen Ausführung des Hochfrequenzgenerators 21 und des Treiberversträkers 22 dargestellt. Der Hochfrequenzgenerator 21 arbeitet mit einem Feldeffekttransistor 34 als aktives Element und mit einem Resonanzschwingkreis, der aus einer Kapazität 40 und einer Induktivität 41 gebildet und über einen Kopplungskondensator 39 an die Steuerelektrode des Feldeffekttransistors 34 angeschaltet ist.

Zwischen der Steuerelektrode des Feldeffekttransistors 34 und der negativen Betriebsspannung ist ein kapazitiver Spannungsteiler mit Kondensatoren 36 und 37 vorgesehen, dessen Abgriff einerseits mit der Drain-Elektrode des Feldeffekttransistors 34, die ihrerseits über einen Arbeitswiderstand 35 mit der negativen Betriebsspannung verbunden ist, andererseits über einen Kopplungskondensator 43 mit dem Eingang des Treiberverstärkers 22 verbunden ist. Dem kapazitiven Spannungsteiler 36/37 ist ein ohmscher Widerstand 38 parallelgeschaltet, der die erforderliche Vorspannung für die Steuerelektrode des Feldeffekttransistors 34 liefert.

Die mit dem Hochfrequenzgenerator 21 erzeugte hochfrequente Wechselspannung wird zusätzlich über eine Auskoppelwicklung 32 an den Ausgang 33 abgegeben. Der hier auftretende Wechselspannungswert kann durch das Übersetzungsverhältnis zwischen der Induktivität 41 und der Auskoppelwicklung 42 dimensioniert werden.

Die über den Kopplungskondensator 43 an den Treiberverstärker 22 abgegebene hochfrequente Wechselspannung steuert zwei Transistoren 44 und 45 einander entgegengesetzten Leitfähigkeitstyps, die einen gemeinsamen Basiswiderstand 46 aufweisen und über einen Emitterwiderstand 47 bzw. 48 jeweils mit der positiven bzw. negativen Betriebsspannung verbunden sind. Sie arbeiten somit in Kollektorbasisschaltung und liefern an ihren Emittern jeweils das Steuersignal für einen weiteren Transistor 49 bzw. 50. Auch diese beiden Transistoren haben entgegengesetzten Leitfähigkeitstyp und bilden eine an die Betriebsspannung angeschaltete Reihenschaltung. Der Verbindungspunkt ihrer Emitterwiderstände 51 und 52 bildet den Ausgang des Treiberverstärkers, der mit dem in Fig. 1 gezeigten Schaltungspunkt 32 verbunden ist.

Da der Gleichrichtertransistor 23 und der Differenzverstärker 31 (Fig. 1) auf sehr geringe Signalamplituden ansprechen und ein hohes Auflösungsvermögen haben, ist eine vorteilhafte Weiterbildung der Schaltung gegeben, wenn durch geeignete Vergrößerung des Längswiderstandes 11 in dem einen Leitungseingang ein über den MOS-Feldeffekttransistor 13 verstärktes und invertiertes Störsignal, das über die Streukapazität 55 zum Gleichrichtertransistor 23 übertragen wird, in seiner Amplitude gleich dem über den Längswiderstand 12 im anderen Leitungszweig und die Streukapazität 53 auf den Gleichrichtertransistor 23 übertragenen Störsignal ist. Somit können durch Störungen dieser Art keine Fehlersignale am Ausgang des Differenzverstärkers 31 auftreten.

Patentansprüche:

1. Schaltungsanordnung zur erdfreien Übertragung von Signalen über Trennstellen in Fernmeldeanlagen mit Hilfe auf der Primärseite der Trennstelle signalgesteuerter hochfrequenter Schwingungen, die auf der Sekundärseite der Trennstelle durch Gleichrichtung zur Wiedergabe der Signale ausgewertet werden, wobei ein auf die hochfrequenten Schwingungen abgestimmter Resonanzschwingkreis, der mit einem Hochfrequenzgenerator galvanisch getrennt gekoppelt ist, mit einer mit dem Eingang der Trennstelle verbundenen Modulationsschaltung verbunden und induktiv mit einer auf der Sekundärseite der Trennstelle vorgesehenen Demodulationsschaltung gekoppelt ist, dadurch gekennzeichnet, daß aus den hochfrequenten Schwingungen durch separate Gleichrichtung eine Gleichspannung zur Kompensation des der Amplitude der modulierten hochfrequenten Spannung entsprechenden Gleichspannungsanteils der demodulierten Signale erzeugt wird.

2. Schaltungsanordnung nach Anspruch 1, dadurch gekennzeichnet, daß die demodulierten Signale einerseits und die zur Kompensation dienende Gleichspannung andererseits auf die beiden Eingänge eines Differenzverstärkers (31) geführt sind, dessen Ausgang den Ausgang (II) der Trennstelle bildet.

3. Schaltungsanordnung nach einem der vorhergehenden Ansprüche, dadurch gekennzeichnet, daß die hochfrequenten Schwingungen des Hochfrequenzgenerators (21) über einen Verstärker (22) auf die Sekundärseite (20, 32) der Trennstelle eingespeist sind, dessen Innenwiderstand vorzugsweise dem am Einspeisungspunkt erscheinenden Widerstand des abgestimmten Resonanzschwingkreises (16, 19) entspricht.

4. Schaltungsanordnung nach einem der vorhergehenden
Ansprüche,
dadurch gekennzeichnet,
daß der abgestimmte Resonanzschwingkreis (16, 19)
eine Induktivität (19) aufweist, die mit kleinstmöglichen Streukapazitäten (53, 55) aufgebaut ist.

5. Schaltungsanordnung nach Anspruch 4,
dadurch gekennzeichnet,
daß ein erster Längswiderstand (11) zwischen dem
einen eingangsanschluß der Trennstelle und der
Gateelektrode eines die Modulationsschaltung bildenden Feldeffekttransistors derart größer als ein
zweiter Längswiderstand (12) an dem anderen Eingangsanschluß ist, daß das verstärkte und invertierte Signal, das bei gleichphasig an beiden Eingangsanschlüssen auftretenden Störungen vom Ausgang
des Feldeffekttransistors (13) über eine erste
Streukapazität der galvanisch getrennten Kopplung
(18) auf die Sekundärseite der Trennstelle übertragen wird, die gleiche Amplitude hat wie das Störsignal, das über den zweiten Längswiderstand (12)
und über eine zweite Streukapazität (53) der galvanisch getrennten Kopplung (18) auf die Sekundärseite der Trennstelle übertragen wird.

6. Schaltungsanordnung nach einem der vorhergehenden
Ansprüche,
dadurch gekennzeichnet,
daß die Demodulatorschaltung und die separate Gleichrichtung als Gleichrichterelement jeweils die Emitter-
Kollektorstrecke eines Transistors (23, 25) enthalten.

Fig. 1

Fig. 2

Europäisches
Patentamt

# EUROPÄISCHER RECHERCHENBERICHT

0006182

79101788.2

| | EINSCHLÄGIGE DOKUMENTE | | KLASSIFIKATION DER ANMELDUNG (Int.Cl.²) |
|---|---|---|---|
| **Kategorie** | **Kennzeichnung des Dokuments mit Angabe, soweit erforderlich, der maßgeblichen Teile** | **betrifft Anspruch** | |
| D | DE-A- 2 504 785 (NIXDORF) <br> *Seite 3, Zeile 23- S.8, Zeile 13; Zeichnung* <br> -- | 1-5 | H 04 L 25/28 <br> H 03 F 3/38 |
| A | DE-B- 2 050 994 (NIXDORF) <br> *Spalte 3, Zeile 37-66; Figur 1* <br> -- | 1 | |
| A | US-A- 3 946 324 (L.R.SMITH) <br> *Spalte 2, Zeile 41 bis Spalte 3, Zeile 26; Figur 1* <br> -- | 1,6 | |
| A | CH-A-516 263 (SVENSKA DATENREGISTER) <br> *Spalte 1, Zeile 1 bis Spalte 2, Zeile 10; Figur 1* <br> -- | 1 | **RECHERCHIERTE SACHGEBIETE (Int.Cl.²)** <br><br> H 04 L 25/28 <br> H 04 L 25/00 |
| A | DE-B- 1 813 122 (TEKADE) <br> *Spalte 1, Zeile 63 bis Spalte 2, Zeile 33; Figur 4* <br> ---- | 6 | H 04 L 25/02 <br> H 03 F 3/38 <br> H 03 F 3/387 <br> H 03 D 1/06 <br> H 03 D 1/04 <br> H 02 M 3/00 |

X Der vorliegende Recherchenbericht wurde für alle Patentansprüche erstellt.

| **Recherchenort** WIEN | **Abschlußdatum der Recherche** 21-08-1979 | **Prüfer** HAJOS |
|---|---|---|

EPA form 1503.1 06.78